# EUROPEAN PATENT SPECIFICATION

(11) **EP 0 574 278 B1**
(45) Date of publication and mention of the grant of the patent: **13.11.1996**
(21) Application number: 93401132.1
(22) Date of filing: 30.04.1993
(51) Int. Cl.: C03B 35/18, B65G 39/07, F27D 3/02, F27B 9/24, B65G 39/02

(54) **Method of bonding two pieces during substantial temperature variations**
Verfahren zur Kupplung von zwei Stücken während starker Temperaturschwankungen
Procédé pour accoupler deux pièces pendant des variations de températures substantielles

(30) Priority: 18.05.1992 FR 9206100
(43) Date of publication of application: 15.12.1993
(73) Proprietor: VESUVIUS FRANCE S.A., F-59750 Feignies (FR)
(72) Inventor: Compagnon-Chopin, Jean Claude, F-59330 Hautmont (FR)

(56) References cited:
- FR-A- 2 393 747
- US-A- 4 399 598
- US-A- 4 404 011

## Description

The object of the present invention is to provide a method of bonding between a first piece of a first material, e.g., a ceramic material, and a second piece of a second material, e.g., a metallic one, that permits assuring a constancy of the bonding qualities despite a high temperature variation to which this assembly is subjected and despite possible significant differences between the coefficients of expansion of the materials constituting the two pieces and a roll assembly applying said method.

A more particular object of it is the assembly of pieces of refractory material, e.g., of vitreous silica, with metal pieces.

This bonding method is applied advantageously, but in a non limiting manner to the bonding of at least one metallic joining piece to a cylinder of vitreous silica. Such a cylinder is designed, for example, to support and/or entrain a load that is displaced on a series of identical rollers also called rolls mounted side by side. This loads can be made up of a strip or sheet material, such as steel or glass.

US patent 4,399,598 describes a ceramic roller for transporting sheets of glass for their heat treatment. The cylinder is mounted revolving on bearings by means of ferrules mounted with play at each end of the cylinder. One or more radially compressible split rings are placed in the space between the outer diameter of the cylinder and the inner diameter of the ferrule.

A roller of a similar type, comprised of a cylinder of refractory material, at the ends of which metal ferrules are fixed, is also known (US Patent 4,404,011). Some play is provided between the ferrules and the cylinder. Longitudinal metal platelets are placed in this play zone ; they are used as springs.

These known systems of the prior art make it possible to take up the differential expansion during a change in temperature. In effect, the cylinder of refractory material expands practically not at all, while the metal ferrules expand a great deal. The play between the cylinder and the ferrules consequently varies in substantial proportions as a function of the temperature. This is the reason why it is necessary to provide elastic devices installed in this space to make up for the play. However, one disadvantage of these devices resides in the fact that the bonding forces between the roller and the ferrule decrease in the case of a temperature rise due on the one band to the drop in the mechanical properties of the springs during the temperature rise and on the other hand due to the increase in play. The maximum value of the bonding force is obtained during the prestressing of the ferrule on the roller at ambient temperature. This prestressing value is limited by the resistance of the materials. These parameters limit the temperature range of good functioning. Assemblies obtained by adhesive bonding are also known. However, these assemblies also present some shortcomings. The quality of the bond is temperature limited in part by the loss of mechanical properties of the adhesive.

The bonding method of the invention remedies these disadvantages. It makes it possible to control the tensions of the bond between the ferrule and the roller, whatever the assemblage diameters, the nature of the materials constituting the roller and its ferrules as well as the operating temperature of the unit.

These goals were achieved by interposing between the roller and the ferrule thermodeformable bimetal plates whose characteristics are chosen as a function of the differential expansion, the machining play and tolerance, the tensions necessary for the temperature functioning and the value of prestressing tensions for the assembly at ambient temperature according to claims 1 and 8.

One of the advantages of the present invention is to be able to modulate the bonding stresses between roller and ferule, to make it possible to keep them constant, and to render them progressive or degressive during temperature variations.

Another advantage of the present invention is to assure a good centering of the ferrules relative to the roller.

This results in good geometric characteristics of the unit during use even at temperatures higher than those permitted by the current solutions.

The thermodeformable elements are preferably designed so that the bonding forces between the two pieces increase or decrease as a function of the utilization temperature of the assembly.

These bimetal elements can be either platelets or tablets. They can be mounted in series, in parallel or in series-parallel. They can also be pre-assembled in a caridge, thermodestructible or not.

According to another characteristic of the invention, the bimetal element or elements can be associated with at least one non-bimetal element, elastic or not.

The bond can be effected with the aid of a combination of a bond by thermodeformable elements and another conventional system such as a spring, adhesion or other conventional means.

The bimetal elements can be fixed either on the roller or on the ferrule or not be fixed.

The thermodeformable bimetal elements can be pre-arched. The invention applies to the bond between a roller and an external ferrule. Other characteristics and advantages of the invention will be manifested in reading the following description of exemplary embodiments given by means of illustration with reference to the attached Figures.

Figures 1 and 2 respectively show a partial view in longitudinal section and a view in cross section of an initial embodiment.

Figures 3 and 4 respectively show a view in longitudinal section and cross section of a second embodiment.

Figures 5 and 6 respectively show a view in longitudinal section and a view in cross section of a third embodiment in which the bimetal tablets are arranged in series.

Figures 7 and 8 respectively show a fourth embodiment in which bimetal tablets are arranged in parallel.

Figures 9 and 10 show a variant of the embodiment in which the tablets are arranged in series parallel.

Figures 11 and 12 show a variant of the embodiment in which bimetal platelets are arranged circumferentially.

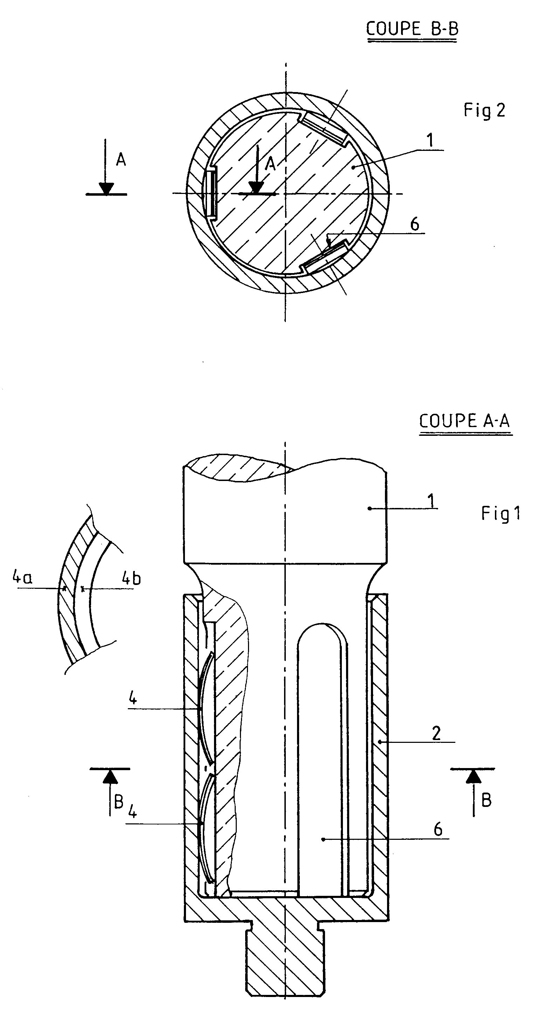

Reference 1 designates a roller in Figures 1 and 2. This roller is of a refractory ceramic material having a low coefficient of expansion, e.g., vitreous silica. Only one end of this roller is shown. It has a cylindrical part, generally with a constant diameter.

The end of it has a part of smaller diameter for receiving the ferrule 2. This ferrule will generally be of a material different from that of the roller, e.g., a metal such as steel. Its coefficient of thermal expansion is consequently much more substantial than that of the material comprising the roller. This is the reason why the space between the outside diameter of the roller and the inside diameter of the ferrule 2 increases greatly with the operating temperature of the assembly. This is why, according to the invention, bimetal thermodeformable elements 4 are provided. These elements are placed in longitudinal grooves 6 in the end of the roller 1. In the exemplary embodiment shown in Figures 1 and 2 there are three grooves 6 in which six bimetal elements 4 are located (two in each groove) with respect to each other. The bimetal elements 4 are comprised, for example, of strips of intimately bound nickel and nickel alloy. The thermodeformable bimetal elements at ambient temperature have an initial predeflection camber in the natural direction of deformation with a temperature rise. This predeflection is designed to assure a pretensioning at ambient temperature that facilitates the roller-ferrule bond and the transmission of a sufficient couple.

The metal of the bimetal platelet presenting the highest coefficient of expansion 4a is located outside of the cambered part, while the second metal 4b of the bimetal platelet is located on the inside. When the temperature of the assembly rises, the play between the roller and the ferrule increases, but at the same time the camber of the bimetal element 4 increases due to the greater expansion of the metal 4a. Thus, the increase in play is compensated by the increase in camber of the bimetal platelets 4. As a result, the transferable couple as well as the alignment of the roller and the ferrule can remain essentially constant and the assembly can be used at a higher temperature than the assemblies of a classic type, the temperature being capable of reaching 750°C or more. By appropriately choosing the nature and characteristics of the thermodeformable bimetal elements (number of elements, dimensions...) it is also possible to increase this transferrable couple with the temperature because the thermodeformable elements more than compensate the increase in play between roller and ferrule.

The predeflection will generally be between 0.2 and 2.5 mm.

To facilitate the assembly of the unit, the thermodeformable bimetal elements could be pre-assembled on the roller or on the ferrule, e.g., by thermally destructible adhesion. The ferrule or ferrules could be heated to reduce the press-on efforts during assembly. According to an assembly variant, the thermodeformable bimetal elements are prepositioned in a cage. It is also possible to cool the bimetal elements so that the inverse deflection resulting from this temperature lower than ambient temperature cancels or minimizes the initial predeflection and thus facilitates an easier assembly of the unit.

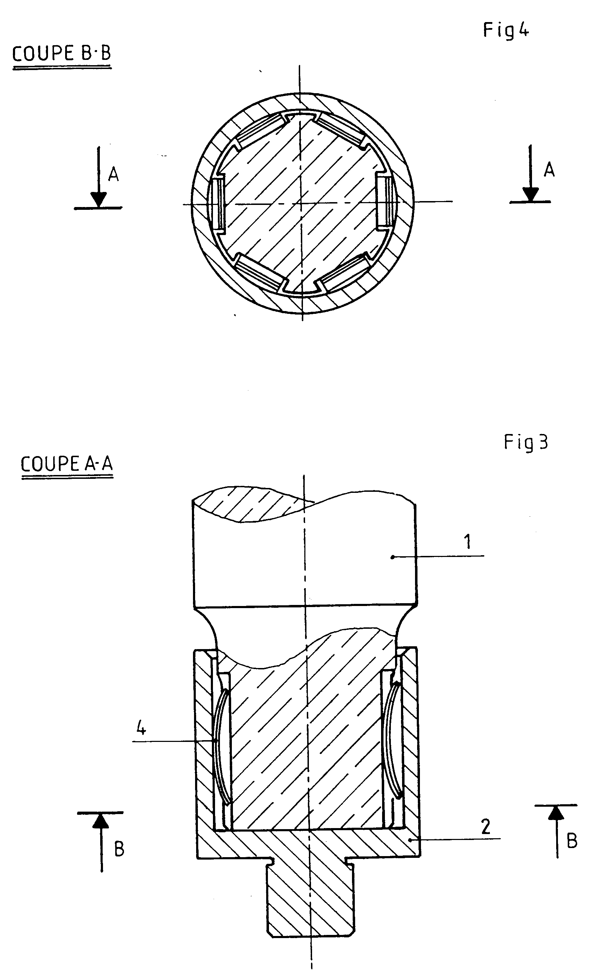

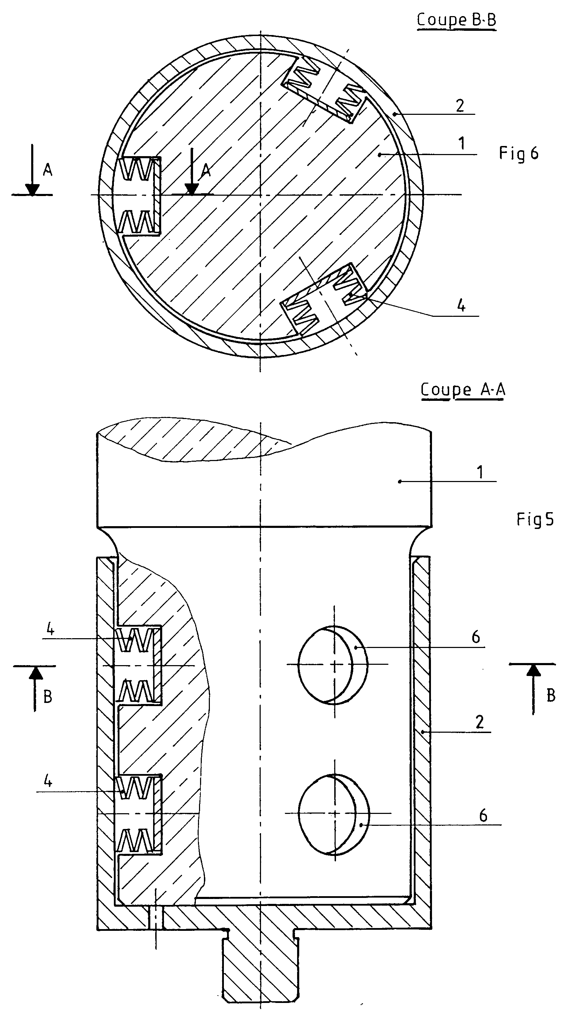

According to another variant, the thermodeformable bimetal elements could be prepositioned and/or prestressed in thermally destructible containers or by other means. Figures 3 and 4 show an embodiment variant whose principle is identical to that expounded with reference to Figures 1 and 2. In this variant the end of roller 1 has six grooves instead of three, but each of these grooves has only one thermodeformable bimetal element 4. Thus, an element of any type is placed between two elements positioned so that their camber is inversed. As explained with reference to Figure 1, the bimetal strips are dished so that the metal 4a with the greater coefficient of expansion is located on the outside. The same is true in the embodiment of Figures 3 and 4. Thus, an element of any type is placed between two elements positioned so that their camber is inversed. As explained with reference to Figure 1, the bimetal strips are dished so that the metal 4a with the greater coefficient of expansion is located on the outside. The same is true in the embodiment of Figures 3 and 4. But, as shown on the left in the Figure, the concavity of the bimetal element is directed toward the ferrule 2 while, as shown on the right of the same Figure 3, the concavity of the other half of the elements is directed toward the roller. The left-hand element thus presents a point of contact with the ferrule and two points of contact with the roller while, inversely, the right-hand element presents a single point of contact with the roller and two points of contact with the ferrule. Three generatrices of contact of bimetal elements on the ferrule and on the roller are thus defined. For short ferrules this type of assembly makes it possible to multiply the number of contact generatrices and thus avoid the swivel effect that would occur if the concavity of the deformable elements was always directed toward the ferrule or the roller. This example is applied where it is necessary to have a short ferrule that does not permit the positioning of two elements in the prolongation of one from the other, as shown in Figures 1 and 2.

Figures 5 and 6 show another variant in which the thermodeformable bimetal elements are comprised of disks or washers with a form analogous to that of the BELLEVILLE-type elastic washers. These disks or washers are placed in cylindrical seats 6 formed at the end of the roller 1. In the exemplary embodiment shown in Figures 5 and 6 the thermodeformable disks or washers are arranged in series so that their unitary deflections are additive. This permits a greater amplitude of movement and thus compensating a greater play. The bonding force applied is that applied by a single disk or washer.

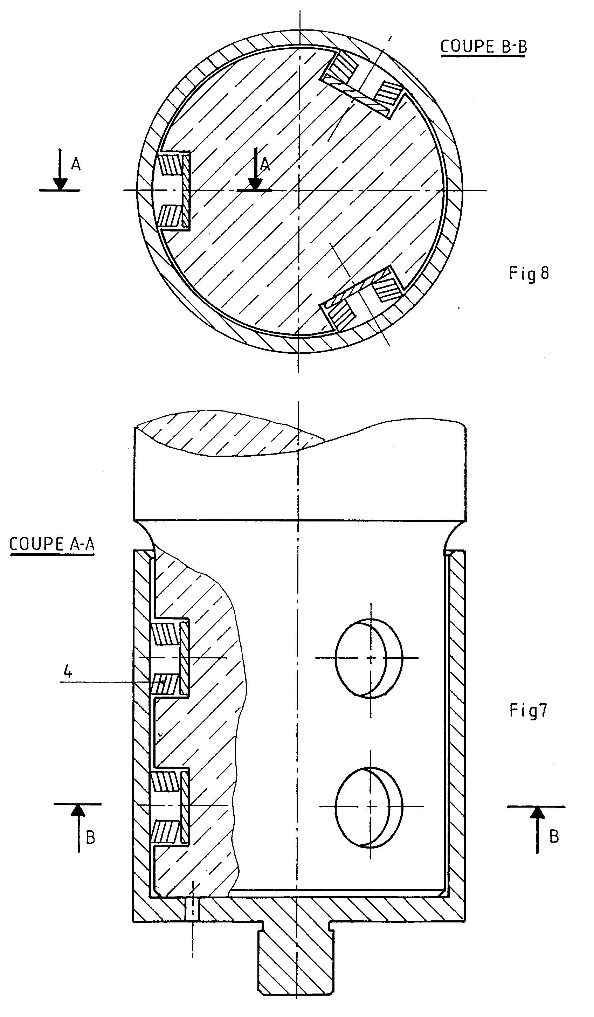

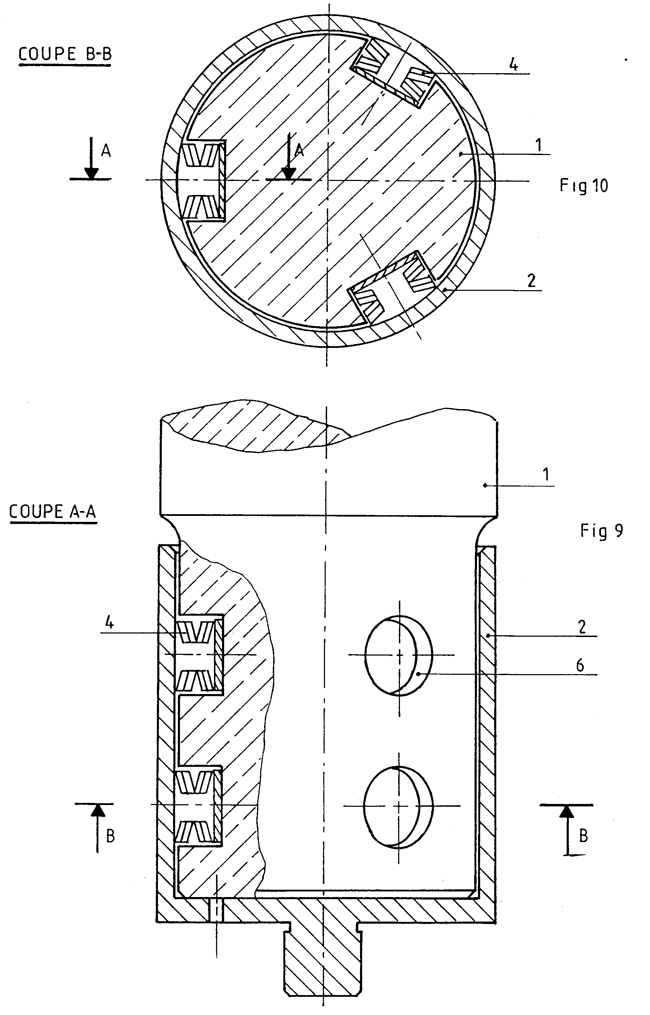

Figures 7 and 8 show a variant of Figures 5 and 6 in which the disks or washers are arranged in parallel instead of in series. The tensions exerted by each of the thermodeformable elements 4 are additive, but the amplitude of the deflection is that produced by a single disk or washer. In Figures 9 and 10 the thermodeformable elements 4 are placed in series-parallel, which facilitates combining the advantages of the two embodiment variants described above, i.e., obtaining a tension and simultaneously a deflection amplitude of the deformable elements greater than those of a single disk or washer.

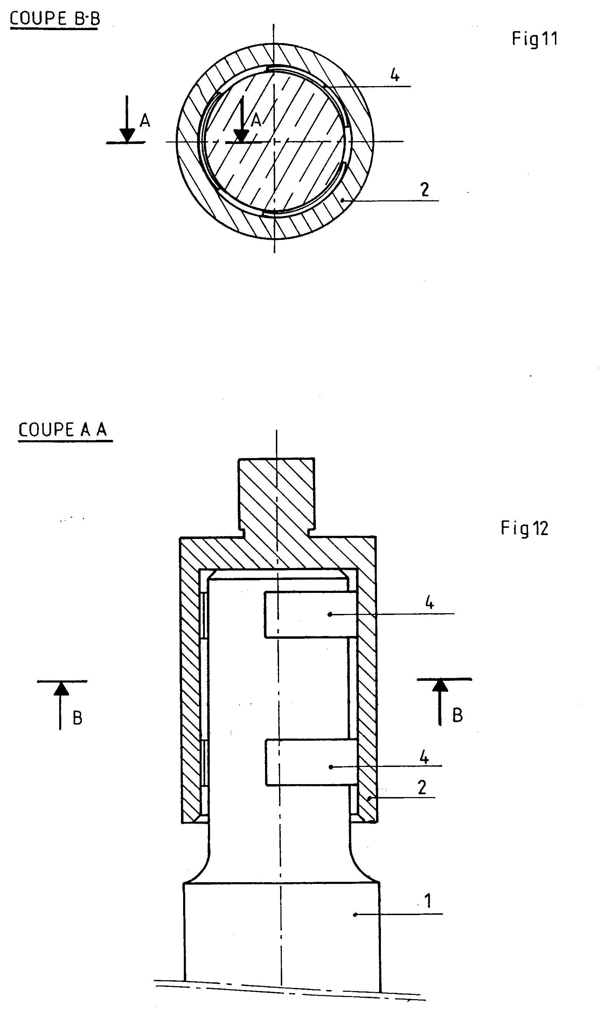

Figures 11 and 12 show an embodiment variant in which the thermodeformable bimetal elements 4 are platelets arranged circumferentially on a part of smaller diameter of the roller 1.

The platelets preferably have a precamber that corresponds to the diameter of the terminal part of the roller or which is slightly larger if one wishes to obtain a pretensioning at ambient temperature.

If it is desirable to obtain a transferred couple that is constant or increasing with the operating temperature of the assembly, the metal 4a having the highest coefficient of expansion would be placed on the outside.

In the contrary case, the metal 4b having the lowest coefficient of expansion is placed on the outside.

## Claims

1. Method of bonding a first piece (1) of a first material and a second piece (2) of a second material, said first and second material having differing coefficients of expansion, characterized in that bimetal elements (4) are interposed between said first piece (1) and said second piece (2) to accommodate a thermal expansion difference between said first and second piece.

2. Method according to any of claims 1 and 2, characterized in that the said bimetal elements (4) are designed so that the bonding forces between the two pieces (1, 2) are independent of a variation in the operating temperature of the assembly.

3. Method according to any of claims 1 and 2, characterized in that the said bimetal elements (4) are designed so that the bonding forces between the two pieces (1, 2) increase or decrease as a function of the variation in the operating temperature of the unit.

4. Method according to any of claims 1-4, characterized in that the bond or linkage is effected jointly by bimetal elements (4) and another system such as springs, adhesive bonding or other conventional means.

5. Method according to any of claims 1-5, characterized in that the bimetal elements (4) are precambered.

6. Method according to any of claims 1-6, characterized in that the bimetal elements (4) have the form of platelets.

7. Method according to any of claims 1-6, characterized in that the bimetal elements (4) have the form of disks or washers.

8. A roll assembly comprising :
- a cylindrically shaped roll body (1) of a ceramic material having axially extending, axially aligned end portions at opposed ends thereof;
- a pair of metal ferrules (2) having an inner cylindrical cavity, each metal ferrule (2) adapted to engage a respective end portion of said ceramic roll body (1);
- characterized in that it comprises a plurality of bimetal elements (4) comprising bonded metal strips, said bimetal elements (4) positioned in recesses (6) circumferentially spaced apart around said ceramic roll body (1) end portions and forceably interposed between each of said ceramic roll body end portions and said metal ferrules (2) for thermal expansion in a single radial direction relative to said ceramic roll body (1) end portions to accommodate a thermal expansion difference between said metal ferrules and said ceramic roll body (1) end portions and to obtain a desired coupling strength between said metal ferrules (2) and said roll body (1) end portions at an elevated operating temperature.

9. The roll assembly of claim 8 wherein said bimetallic elements (4) have an arcuate shape.

10. The roll assembly of claim 8 wherein said bimetal elements (4) are in the form of discs or washers.

11. The roll assembly of claim 8 wherein the ceramic roll body (1) is a fused silica material and wherein said thermodeformable bimetal elements (4) each comprises an arcuately shaped, bonded metal strip of two layers of a nickel and a nickel alloy wherein an outer layer has a higher coefficient of thermal expansion than an inner layer.

## Patentansprüche

1. Verfahren zur Verbindung eines ersten Stücks (1) aus einem ersten Material mit einem zweiten Stück (2) aus einem zweiten Material, wobei das erste und das zweite Material verschiedene Ausdehnungskoeffizienten aufweisen, dadurch gekennzeichnet, daß zwischen das erste Stück (1) und das zweite Stück (2) Bimetallelemente (4) gelegt sind, um eine Wämeausdehnungsdifferenz zwischen dem ersten und dem zweiten Stück auszugleichen.

2. Verfahren nach einem der Ansprüche 1 und 2, dadurch gekennzeichnet, daß die Bimetallelemente (4) so gestaltet sind, daß die Verbindungskräfte zwischen den zwei Stücken (1, 2) unabhängig von einer Änderung der Betriebstemperatur des Aufbaus sind.

3. Verfahren nach einem der Ansprüche 1 und 2, dadurch gekennzeichnet, daß die Bimetallelemente (4) so gestaltet sind, daß die Verbindungskräfte zwischen den zwei Stücken (1, 2) als Funktion der Änderung der Betriebstemperatur der Einheit größer oder kleiner werden.

4. Verfahren nach einem der Ansprüche 1-4, dadurch gekennzeichnet, daß die Verbindung oder Kupplung gemeinsam durch Bimetallelemente (4) und ein weiteres System wie Federn, Klebeverbindungen oder andere herkömmliche Mittel bewirkt wird.

5. Verfahren nach einem der Ansprüche 1-5, dadurch gekennzeichnet, daß die Bimetallelemente (4) vorgewölbt sind.

6. Verfahren nach einem der Ansprüche 1-6, dadurch gekennzeichnet, daß die Bimetallelemente (4) die Form von Plättchen aufweisen.

7. Verfahren nach einem der Ansprüche 1-6, dadurch gekennzeichnet, daß die Bimetallelemente (4) die Form von Scheiben oder Unterlegscheiben aufweisen.

8. Walzenaufbau, der folgendes aufweist:
- einen zylindrisch geformten Walzenkörper (1) aus einem Keramikmaterial, der an seinen einander entgegengesetzten Enden axial verlaufende, axial ausgerichtete Endteile aufweist;
- ein Paar Metallringbeschläge (2) mit einer inneren zylindrischen Höhlung, wobei jeder Metallringbeschlag (2) dafür eingerichtet ist, an einem jeweiligen Endteil des Keramikwalzenkörpers (1) anzugreifen;
- dadurch gekennzeichnet, daß er eine Vielzahl von Bimetallelementen (4) aufweist, die Verbundmetallstreifen aufweisen, wobei die Bimetallelemente (4) in Ausnehmungen (6) angeordnet sind, die in Abständen um den Umfang der Endteile des Keramikwalzenkörpers (1) herum angeordnet sind und die unter Druck zwischen jeden Endteil des Keramikwalzenkörpers und die Metallringbeschläge (2) gelegt sind, für eine Wärmeausdehnung in einer einzigen radialen Richtung in bezug auf die Endteile des Keramikwalzenkörpers (1), um eine Wämeausdehnungsdifferenz zwischen den Metallringbeschlägen und den Endteilen des Keramikwalzenkörpers (1) auszugleichen und um bei einer erhöhten Betriebstemperatur eine gewünschte Kupplungsstärke zwischen den Metallringbeschlägen (2) und den Endteilen des Keramikwalzenkörpers (1) zu erhalten.

9. Walzenaufbau nach Anspruch 8, wobei die Bimetallelemente (4) eine gebogene Form aufweisen.

10. Walzenaufbau nach Anspruch 8, wobei die Bimetallelemente (4) die Form von Scheiben oder Unterlegscheiben aufweisen.

11. Walzenaufbau nach Anspruch 8, wobei der Keramikwalzenkörper (1) aus einem Quarzglasmaterial besteht und wobei die Bimetallelemente mit Wärmeformänderung (4) jedes einen gebogen geformten Verbundmetallstreifen aus zwei Schichten aus Nickel und einer Nickellegierung aufweisen, wobei eine äußere Schicht einen höheren Wärmeausdehnungskoeffizienten als eine innere Schicht aufweist.

## Revendications

1. Procédé pour accoupler une première pièce (1) faite d'une première matière et une seconde pièce (2) faite d'une seconde matière, lesdites première et seconde matières ayant des coefficients de dilatation différents, caractérisé en ce que des bilames (4) sont interposés entre ladite première pièce (1) et ladite seconde pièce (2) pour concilier une différence de dilatation thermique entre lesdites première et seconde pièces.

2. Procédé selon l'une quelconque des revendications 1 et 2, caractérisé en ce que lesdits bilames (4) sont conçus de telle façon que les forces d'accouplement entre les deux pièces (1, 2) sont indépendantes d'une variation de la température de fonctionnement de l'ensemble.

3. Procédé selon l'une quelconque des revendications 1 et 2, caractérisé en ce que lesdits bilames (4) sont conçus de manière à ce que les forces d'accouplement entre les pièces (1, 2)augmentent ou diminuent en fonction de la variation de la température de fonctionnement de l'ensemble.

4. Procédé selon l'une quelconque des revendications 1 à 4, caractérisé en ce que l'accouplement ou la liaison est réalisé conjointement par des bilames (4) et un autre système, tel que des ressorts, un collage ou d'autres moyens classiques.

5. Procédé selon l'une quelconque des revendications 1 à 5, caractérisé en ce que les bilames sont préalablement cintrés.

6. Procédé selon l'une quelconque des revendications 1 à 6, caractérisé en ce que les bilames ont la forme de plaquettes.

7. Procédé selon l'une quelconque des revendications 1 à 6, caractérisé en ce que les bilames (4) ont la forme de disques ou de rondelles.

8. Ensemble à rouleau se composant:
d'un corps de rouleau de forme cylindrique (1) réalisé dans une matière céramique comportant des parties d'extrémité se prolongeant axialement, axialement alignées, aux extrémités opposées de celui-ci;
d'une paire de frettes métalliques (2) comportant une cavité cylindrique intérieure, chaque frette métallique (2) conçue pour s'emmancher sur une partie d'extrémité respective dudit corps de rouleau en céramique (1);
caractérisé en ce qu'il comporte une pluralité de bilames (4) faits de lamelles de métal collées, lesdits bilames (4) positionnés dans des logements (6), espacés sur la circonférence des parties d'extrémité dudit corps de rouleau en céramique (1) et interposés par montage à force entre chacune desdites parties d'extrémité du corps de rouleau en céramique et lesdites frettes métalliques (2) pour une dilatation thermique dans une direction radiale unique par rapport auxdites parties d'extrémité du corps de rouleau en céramique (1) pour concilier une différence de dilatation thermique entre lesdites frettes métalliques et lesdites parties d'extrémité du corps de rouleau en céramique (1) et pour obtenir une force d'accouplement désirée entre lesdites frettes métalliques et lesdites parties d'extrémité du corps de rouleau en céramique (1) en présence d'une température élevée.

9. Ensemble à rouleau selon la revendication 8, dans lequel lesdits bilames (4) ont une forme arquée.

10. Ensemble à rouleau selon la revendication 8, dans lequel lesdits bilames (4) se présentent sous la forme de disques ou de rondelles.

11. Ensemble à rouleau selon la revendication (8), dans lequel le corps de rouleau en céramique (1) est fait de silice fondue et dans lequel lesdits bilames thermodéformables (4) se composent chacun d'une lamelle métallique collée de forme arquée faite de deux couches de nickel et d'alliage de nickel, dans laquelle la couche extérieure a un coefficient de dilatation thermique supérieur à celui de la couche intérieure.
